# NEW EUROPEAN PATENT SPECIFICATION

(11) **EP 0 476 771 B2**
(45) Date of publication and mention of the opposition decision: **14.03.2001**
(45) Mention of the grant of the patent: 03.05.1995
(21) Application number: 91202364.5
(22) Date of filing: 17.09.1991
(51) Int. Cl.: A01K 13/00, A01K 1/12

(54) **A cleaning apparatus**
Reinigungsvorrichtung
Dispositif de nettoyage

(30) Priority: 18.09.1990 NL 9002047
(43) Date of publication of application: 25.03.1992
(60) Divisional application: 94203054.5
(73) Proprietor: MAASLAND N.V., 3155 PD Maasland (NL)
(72) Inventor: van der Lely, Edwin, NL-3155 PD Maasland (NL); van den Berg, Karel, NL-2971 BR Bleskensgraaf (NL); Fransen, René, NL-3135 ZD Vlaardingen (NL)
(74) Representative: Corten, Maurice Jean F.M.

(56) References cited:
- EP-A- 0 091 892
- EP-A- 0 300 582
- EP-A- 0 309 036
- EP-A- 0 332 231
- WO-A-89/00378
- DD-A- 127 384
- DD-A- 220 212
- FR-A- 2 159 370
- FR-A- 2 559 351
- GB-A- 976 025
- NL-A- 8 702 285
- US-A- 2 952 860
- "Handbook of Milking", DeLaval Agricultural Division, Alfa-Laval, Inc., 5th printing, 1982
- Publicity brochure "Fight mastitis - it pays!", Alfa-Laval, 1974
- "Hygienische Euterreinigung mit gereinigten und desinfizierten Schwammtüchern" by H.H. Siegler, Tierärztliche Umschau 43, 107-108, 1988

## Description

The present invention relates to an apparatus for cleaning the teats of a dairy animal's udder, provided with a cleaning member capable of being driven and taken, at least partly, under the udder of the dairy animal, the cleaning member being provided with at least two cleaning tools which are mounted to rotate about a shaft.

Such an apparatus is known from the French patent application 2 559 351.

In the known apparatus use is made of two rotary brushes which are arranged parallel to each other and which, during operation, rotate in opposite directions. The teats of the animal are enclosed by the rotating brushes during the cleaning. the cleaning apparatus it is possible to utilize a spray unit to apply a cleaning liquid, such as tepid water, to the udder and teats during the so-called "wet" cleaning.

The use of such brushes has the drawback that the brushes are hard to decontaminate after the teat cleaning operation. In addition, wet cleaning calls for provisions for catching the cleaning liquid.

The present invention aims at providing a cleaning apparatus such as is described in the opening paragraph, which apparatus operates on a principle different from that of brushing and which obviates the drawbacks mentioned or at least limits them to a considerable extent.

For this purpose, an apparatus as meant in the opening paragraph, in accordance with the invention, is characterized in that the cleaning tools are fully or partly constituted by or have a surface constituted by a moisture-absorbing material being made from a woven product fabric, said cleaning tools operating with a rubbing motion.

The action with rubbing motion of the cleaning tools is effected differently from that by brushing down with bristles.

Due to the fact that the surface of the cleaning tools is constituted by a moisture-absorbing material, it is possible to moisten the cleaning tools to a limited extent and thus making it possible to clean the teats "wet". The effect that the surface of the cleaning tools is constituted by a moisture-absorbing material has the advantage that the cleaning liquid with which the cleaning tools are moistened is not splashed about, so that it is not necessery to make additional provisions for catching the cleaning liquid, which e.g. is the case with the application of a spray unit.

A particularly advantageous effect is obtained with the apparatus according to the invention as a result of the cleaning tools having such a direction of motion that the teats are drawn between the cleaning tools.

The present invention also relates to an apparatus for cleaning the teats of a dairy animal's udder provided with a cleaning member capable of being driven and taken, at least partly, under the udder of the dairy animal, the cleaning member being provided with at least two cleaning tools which are each mounted to rotate about a shaft, said shafts being parallel to one another while the cleaning tools are constituted by a closed cell structure, characterized in that the cleaning tools have such a direction of motion that the teats. are drawn between the cleaning tools, said tools operating with a rubbing motion.

In a preferred embodiment of the invention, the cleaning tools are of a tubular shape and made from a flexible material. The cleaning tools may particularly be provided with profiles, which e.g. are in the shape of ridges running along the circumference of the cleaning tools. Further, according to the invention, the two cleaning tools are each other's mirror image and a recess between ridges is of such a shape that the cleaning tools together are capable of enclosing a teat in it. Here, the profiles are preferably of a circular shape.

Further, the cleaning tools can have a fully or partly closed cell structure, in particular the cells of the cleaning tools can have a semi-permeable wall. This provides the possibility of a cleaning or disinfecting liquid being allowed, through one side, through the cell wall of the cleaning tools, thereby moistening the other side of the cleaning tools. To this end, the cleaning tools may have a portion with an empty space, in which a liquid, such as a cleaning or disinfecting liquid, can be fed. The advantage of the semi-permeable wall is that the cleaning tool is moistened with the cleaning or disinfecting liquid without requiring additional provisions, such as a tank containing cleaning or disinfecting liquid, or a spray unit.

According to a feature of the invention, the cleaning tools may be of an elastic material, such as rubber or plastic, assuming its operative shape at a certain pneumatic or hydraulic pressure.

In a preferred embodiment of the invention, the surface of the cleaning tools is fully or partly constituted by a layer which has a texture or which is made from a woven product or fabric and which layer is, e.g. through a sleeve, exchangeably applied to the cleaning tools.

According to an other embodiment of the invention, the cleaning member comprises cleaning tools coupled to a rotary shaft pointing upward. The invention furthermore relates to an apparatus for cleaning the teats of a dairy animal's udder, characterized in that there is provided a cleaning member which is capable of being driven, which is capable of being taken, at least partly, under the dairy animal's udder, and which is provided with cleaning tools coupled to a rotary shaft pointing upward.

According to a feature of the invention, the cleaning tools are made from a flexible, strip-like material. Furthermore, the cleaning tools are disposed such that under the action of the centrifugal force they assume an attitude sloping upward in radial outward direction.

From the GB-P 976 025 there is known a device for washing the udders of cows, which device comprises a brush mounted on a vertical drive shaft driven by a motor. During cleaning, the brush is moved in a horizontal plane with reciprocating movements. As in the earlier discussed French patent, it is with this washing device also possible to utilize a spray unit for the so-called "wet" cleaning.

In an advantageous embodiment of the invention, the cleaning member is capable of being motor-driven and is provided on or near the extremity of a support to be placed under the dairy animal. The support is suitable for being placed on or near the end of a robot arm, which can be a separate robot arm or the same robot arm as the one with which the teat cups can be attached. In the latter case, the support is secured to the teat cups by suction. Hereto, the support can be provided with projections enabling the support to be secured by suction in a fixed position in relation to the teat cup cluster.

In a further embodiment of the invention there are provided cleaning means for decontaminating the cleaning tools.

The cleaning tool/tools and/or cleaning member may be taken to a cleaning plant by a robot arm which can be the same robot arm for attaching the teat cups or a separate robot arm on which the cleaning tools and/or the cleaning member, performing the cleaning operation, is/are located.

In a preferred embodiment, the cleaning plant comprises a container in which a cleaning or rinsing liquid can be provided. A second container is arranged in the first container and is provided with perforations. The second container is rotatable with respect to the outer container. In the container there is/are provided one or a plurality of brushes, by means of which the cleaning tools are brushed down. In the container there is a sensor for monitoring the quality of the cleaning or rinsing liquid.

In explanation of the invention, a few embodiments of the apparatus according to the invention will now be described with reference to the accompanying drawings, in which:
Figure 1 shows a top view of the apparatus for cleaning the teats of a dairy animal's udder;
Figure 2 shows a side view of the apparatus depicted in Figure 1;
Figure 3 is a top view of a first embodiment of the cleaning member as used in the apparatus depicted in Figure 1;
Figure 4 shows a partial cut-away side view according to line IV-IV in Figure 3;
Figure 5 shows a side view along the arrow V in Figure 3;
Figure 6 shows a side view of a second embodiment of a cleaning member;
Figure 7 is a top view of the paths described by the cleaning tools of the cleaning member accoding to Figure 6.

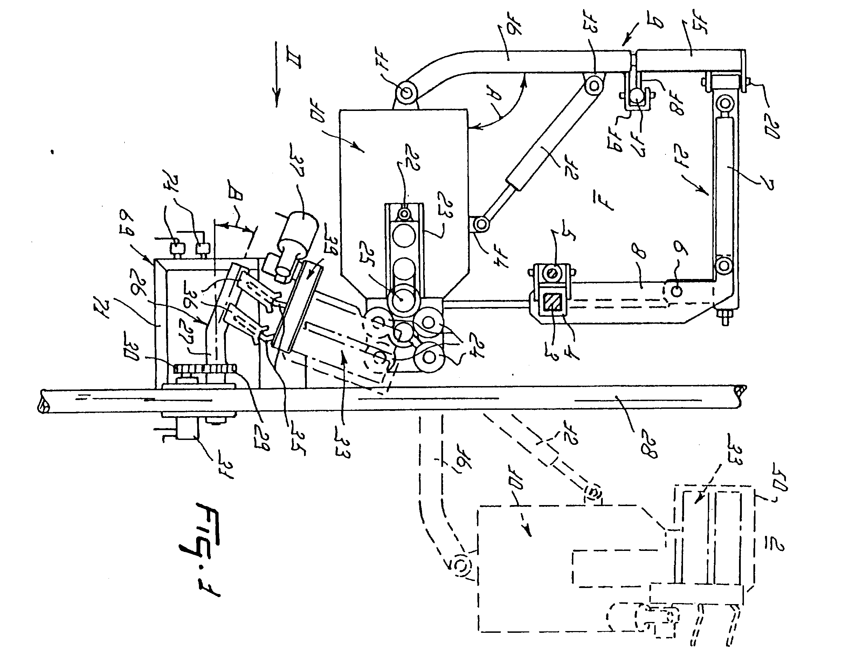

The apparatus depicted in Figure 1 has a robot arm 1 which, in the position marked by continuous lines, is in a condition of rest, and, in the position marked by dashed lines, is in operating condition. Figure 1 shows only the side portion of a cleaning/milking parlour. To the right and to the left, this cleaning/milking parlour is extended with common frame parts, gates for opening and closing to enable an animal, such as a cow, to enter and to leave the parlour, a feeder etc., the said parts having no direct connection with the invention.

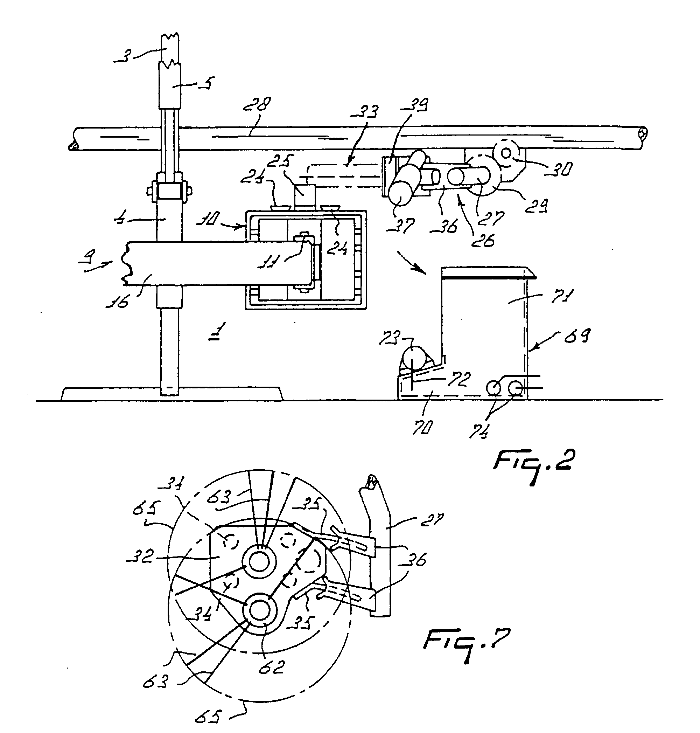

When an animal has taken its place on the milking/cleaning parlour 2, a milking/cleaning apparatus can be applied to the teats of the dairy animal's udder by swivelling robot arm 1. As will appear from the following, the robot arm 1 depicted in Figures 1 and 2 is suitable for taking both the cleaning apparatus and the teat cups under the animal to be milked. It stands to reason that separate robot arms can also be used for cleaning the teats and for attaching the teat cups.

A robot arm 1 for attaching the teat cups has been described extensively in European Patent Application 0300582. The robot arm 1 is connected slidably in height with a frame beam 3 by means of a sliding sleeve 4 which is mounted slidably on the frame beam 3. Sliding the slidable sleeve 4 in upward direction is effected by means of a cylinder 5, one end of which is connected with the frame beam 3 and the other end with the sliding sleeve 4. Furthermore, the robot arm 1 can be swivelled about a substantially vertical hinge pin 6. The robot arm is swivelled about the vertical hinge pin 6 by means of a cylinder 7, one end of which is (rotatably) attached to a support 8 welded onto the frame beam 3 and the other end (rotatably) attached to a first portion 9 of the robot arm 1. It will be obvious that the robot arm 1 can be swivelled from the position of rest to the operating position, and vice versa, by operating the cylinder 7.

A second portion 10 is pivotably mounted on a hinge pin 11 on the first portion 9 of the robot arm 1. The second portion 10 of the robot arm 1 can be swivelled about the hinge pin 11 by means of a cylinder 12 whose one end is secured to a support 13 of the first portion 9 of the robot arm 1 and whose other end is secured to a support 14 of the second portion 10 of the robot arm 1. The second portion 10 of the robot arm 1 can be swivelled about the hinge pin 11 into a desired angle A by means of the cylinder 12.

The first portion 9 of the robot arm 1 comprises a portion 15 and a portion 16 which can turn in relation to one another as is indicated by the arrows in Figure 1. The two portions 15, 16 can be turned in relation to one another by means of a cylinder 17. One end of the cylinder 17 is connected with a support 18 mounted to the portion 15 and the other end is connected with a support 19 mounted on the portion 16. The second portion 10 of the robot arm 1 can be put at an angle to a horizontal plane by means of the cylinder 17.

The first portion 9 of the robot arm 1 is also provided with a hinge 20 connecting a portion 21 with the portion 15. The hinge 20 is meant for protection of the robot arm 1. In the unlikely event of the animal treading on the second portion of the robot arm 1, the two portions 15 and 21 will pin-pivot in relation to one another against the action of springs, thus limiting the risk of the robot arm 1 being damaged to a considerable extent.

Mounted on the second portion 10 of the robot arm 1 (see Figure 1) is a slide 22 which can be moved along a rail 23 through the activation of a (non-shown) control cylinder. On the slide 22 there are provided teat cups 24 as well as (non-shown) attachment means suitable for attaching the teat cups 24 to the teats.

Furthermore, a sensor 25 capable of detecting the animal's teats is provided on the slide 22. The signal produced by the sensor 25 is processed by a computer to generate a signal serving the operation of the control cylinders of the robot arm 1. This enables the end of the robot arm to follow continuously the relevant teats when the animal changes (to some extent) its position.

Besides a first robot arm 1, a second robot arm 26 is provided. The second robot arm 26 comprises a shaft 26, of which one end is suspended in a bearing on the frame 28 and which shaft is provided with a gear wheel 29 meshing with a second gear wheel 30 fitted on the shaft of an electric motor 31 attached next to the bearing of the second robot arm 26 to the frame 28. A removable support 32 is attached to the free end of the second robot arm 26 which cranked through angle B and has a cleaning member 33 disposed on it.

The bottom side of the support 32 is provided with a teat-shaped projection 34, by means of which it is posisble to place the support 32 on the first robot arm 1. To this end, the first robot arm 1 with the teat cups 24 have to be taken to a position under the teat-shaped projections 34 of the support 32. By applying a vacuum to the teat cups 24, the teat-shaped projections 34 are drawn into, and secured to, the teat cups 24 by suction, enabling the support 32, one end of which is provided with spring-steel strips 35 in holders 35, to be detached from the second robot arm 26. An electric motor 37 attached to the support 32 is for driving the cleaning member 33. The control of the electric motor 37 proceeds through a flexible electrical cable 38.

An alternative is to realise the control of the electric motor 37 through contact strips which are located on the bottom side of the support 32, which contact strips make contact with contact strips located on the first robot arm 1 or the second robot arm 26, as the case may be, after the support 32 has been secured by suction.

Before the teat cups 24 are connected to the animal to be milked, the animal's teats should be cleaned. By means of an identification system to identify a given animal and the sensor 25 which is located on the first robot arm 1 and which is capable of detecting the positions of the teats, the first robot arm is put into an appropriate position under computer control. All this being known to the art and being no part of the present invention, further details will not be described hereinafter.

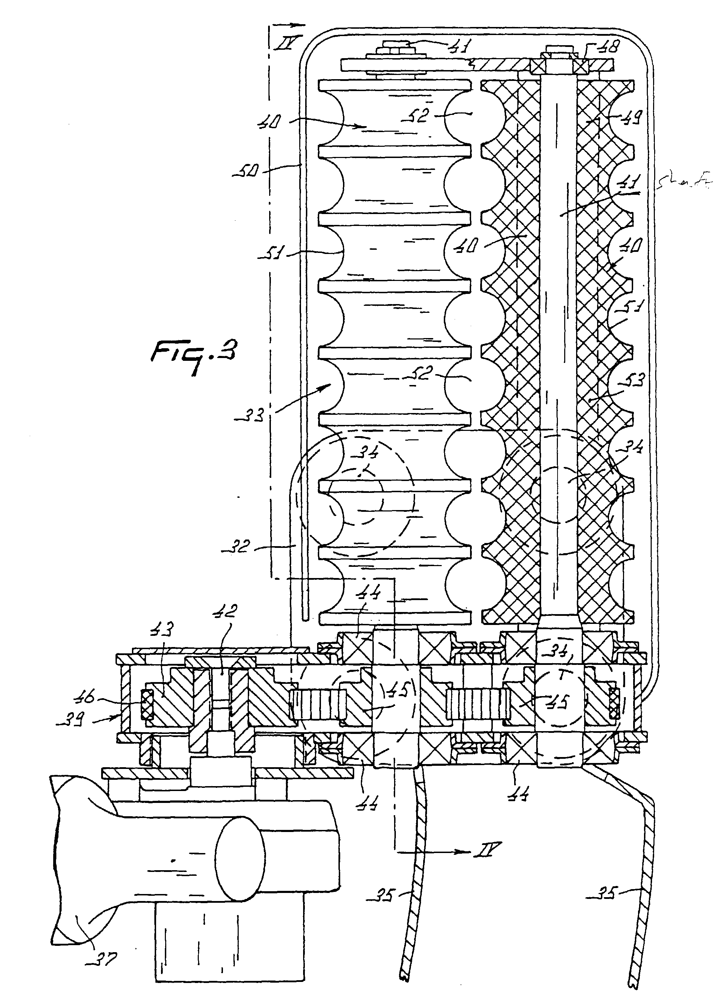

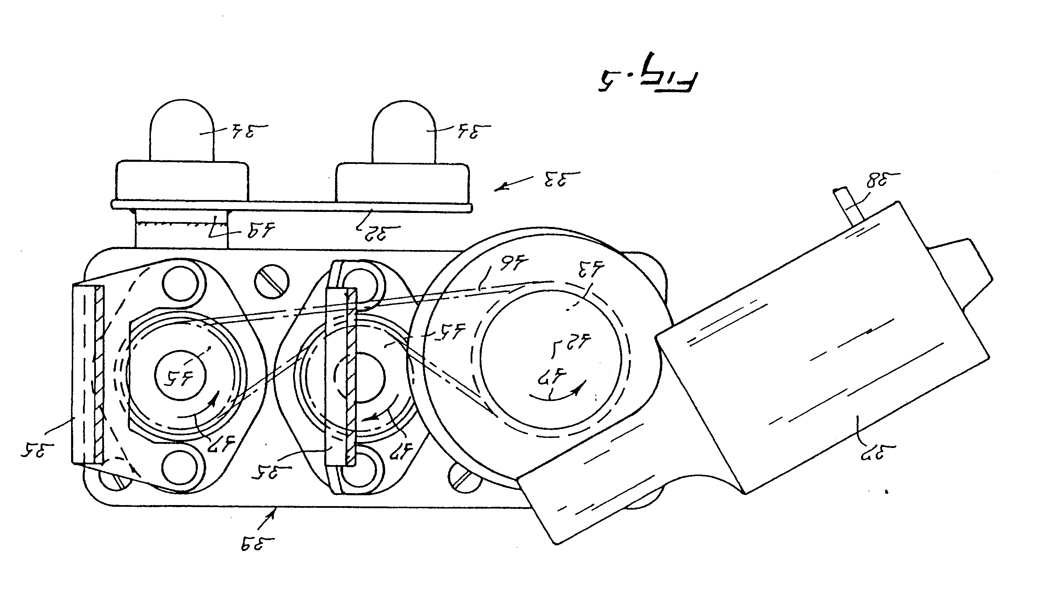

Figure 3 shows a top view of the cleaning member 33. The cleaning member 33 comprises a housing 39 accommodating cleaning tools 40 with shafts 41 and having the electric motor 37 attached. The electric motor 37 is to drive a shaft 42 on which a gear wheel 43 is mounted, with the gear wheel 43 being located within the housing 39. The shafts 41 are supported in bearings 44 fitted on the housing. Situated within the housing 39, gear wheels 45 are mounted at the end of the cleaning tools 40. A timing belt 46 connects the gear wheels 45 of the cleaning tools 40 to the gear wheel 43 of the electric motor 37. From Figure 5 it can be seen that the timing belt 46 is routed round the outer two gear wheels 43, 45 and is underneath the middle gear wheel 45. The situation of the timing belt 44 on the gear wheels 43, 45 results in a direction of rotation of the cleaning tools 40 as is indicated by the arrows 47 in Figure 5. A teat coming from above into the space between the cleaning tools 40 is drawn downward in between the cleaning tools owing to this direction of rotation. Thus a "locating" action of the cleaning tools 40 is obtained. The rotational speed of the cleaning tools 40 is adjustable, with its value being roughly between 70 and 120 RPM.

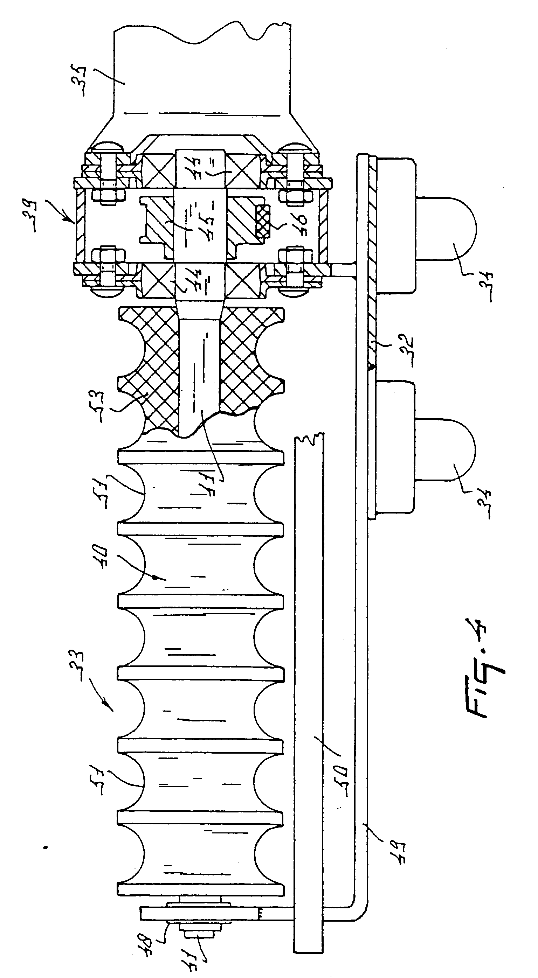

Figure 4 shows that the shafts 41 of the cleaning tools 40 have the other ends supported in bearings 48 fitted in brackets 49 extending underneath the cleaning tools 40. The brackets 49 prevent the shafts 41 of the cleaning tools 40 from flexing too far.

A contact strip 50 encircling the cleaning member 33 and, like all other controllable elements of the apparatus, being connected to the computer ensures that the cleaning member 33 will not be damaged when it comes into contact with the animal. To achieve this, the computer sends the robot arm 1 in a direction away from the point of contact.

Mounted on each of the shafts 41 is a flexible cleaning tool 49 having a closed cell structure and having a profile 51 on the outer side. The profile 51 is ridged in shape and it has such dimensions that the two cleaning tools 40 disposed parallel and side by side enclose a space 52 formed by their profiles 51, into which a teat can be drawn. The surface of the cleaning tools 40 is that of a textured, moisture absorbing layer 53. The layer 53 is constituted by a replaceable sleeve pushed onto cleaning tool 40, as is indicated by the hatching in Figure 3. When the sleeve is worn and/or not cleanable any more, it should be renewed.

A further alternative is to replace the whole cleaning tools 40 when they are soiled or worn. This is achieved e.g. by securing the shaft 41 in the housing 39 by means of a quick-action attachment, such as a bayonet joint.

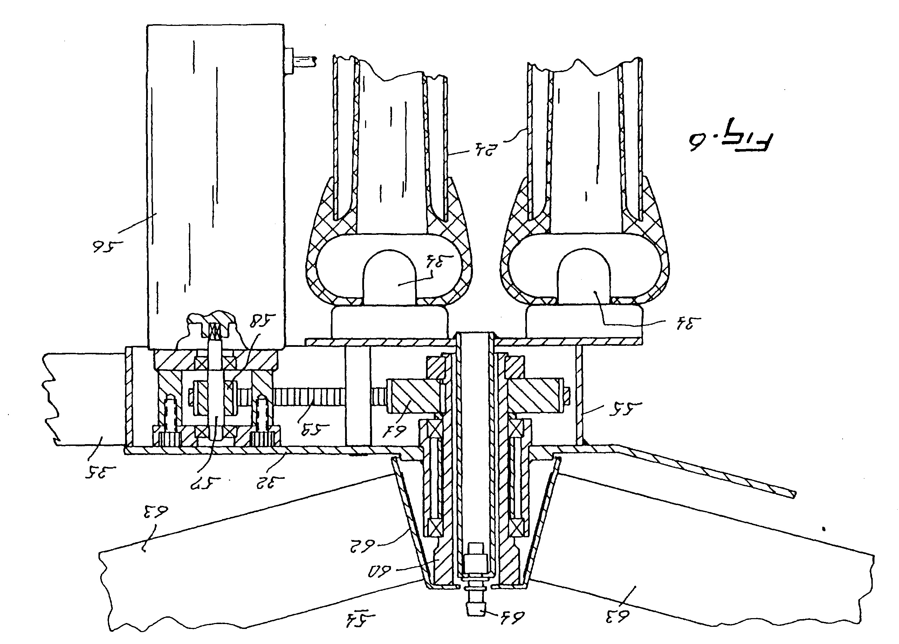

Figure 6 shows a different embodiment of the cleaning member; this cleaning member 54 is mounted on the support 32 in a similar way as is the cleaning member 33 mentioned before. The cleaning member 54 is attached by suction to the teat cups 24 by means of the teat-shaped projections 34 of the support 32. On the support 32 there is provided a housing 55, to whose bottom side an electric motor 56 is attached. The electric motor 56 is to drive a shaft 57 located in the housing 55 where it is supported in bearings. The shaft 57 is provided with a gear wheel 58, by means of which a timing belt 59 is driven. The cleaning member 54 has a shaft 60 supported in bearings in the housing 55 and its lower end is provided with a gear 61 carrying the timing belt 59 driven by the gear wheel 58 of the electric motor 56. At the other end of the shaft 60 there is provided a conical cap 62, to which strip-shaped pieces of cloth (cleaning tools) 63 are attached. The length of the pieces of cloth 63 measured with respect to the centre of the shaft 60 is about 240 mms. The rotary speed of the shaft 60 is about 450 RPM. At said rotary speed, the cleaning tools 63 assume an attitude which is upwardly sloping in radial direction under the influence of the centrifugal force exerted. In the vicinity of the top of the conical cap 62 there is provided a switch 62 which causes the rotation of the shaft 60 to stop when the switch 64 is operated by touching the animal. Thus, it is obviated that injuries are inflicted on the animal when the rotating cone 62 is pressed against her.

The robot arm 1 puts the rotating pieces of cloth 63, which have been moistened to a certain extent, into such a position that they strike the teats and, owing to their flexibility, surround same. Alternatively, it is also possible to dispose two such cleaning members 54 side by side. In Figure 7 the two rotary paths 65 of the cleaning tools 63 are indicated by dashed lines. The cleaning members 54 are disposed such that the axes of rotation of the shafts 60 are inclined with respect to the support 32. Consequently, the two rotary paths 65 of the rotary cleaning tools 63 are parallel to each other. This makes it feasible to clean fore and hind teats at the same time.

After the cleaning of the teats, the cleaning member 33, 54 can be removed from the space under the animal by means of the robot arm 1. Then, the support 32 with the spring steel strips 35 is re-inserted into the holders 36. Subsequently, the vacuum of the teat cups 24 is released and the first robot arm 1 is disconnected from the support 32. Before cleaning another animal, it is possible to wash the cleaning member 33, 54. Hereto, the electric motor 37, 56 of the second robot arm 26 is energized, so that shaft 27 rotates through a certain angle. The cleaning member 33, 54 is thus taken to a washing machine 69, In Figure 2, the washing machine 69 comprises a first container 70 and, disposed herein, a rotatable second container 71 provided with perforations. The first container 70 is capable of being filled with a cleaning or rinsing liquid by means of a pump 73 using a line 72 connected to the first container 70. The perforated container 71 ensures that the cleaning or rinsing liquid is agitated appropriately. To prevent liquid from dripping from the cleaning tools 40, 63 during the cleaning of teats, the cleaning tools 40, 63 are removed from the liquid and rotated at a high speed for some time. This causes the excess liquid to drop back into the first container 70.

After a given time, the electronic motor 31 can be energized again, causing the second robot arm 26 to return to its original position.

In the washing machine 69 there is provided a liquid-quality monitoring sensor 74 which tests the quality of the remaining cleaning or rinsing liquid. For instance, this is a luminous-intensity sensor. When it is detected that the liquid quality is insufficienty, the dirtied liquid can be drained off by activation of the pump 73 and fresh cleaning or rinsing liquid be pumped into the container 70. To achieve better cleaning results, the cleaning or rinsing liquid can be preheated. This can be realised by means of a heater coil or a (small-size) domestic heater.

## Claims

1. An apparatus for cleaning the teats of a dairy animal's udder provided with a cleaning member (54) capable of being driven and taken, at least partly, under the udder of the dairy animal, the cleaning member (54) being provided with at least two cleaning tools (63) which are mounted to rotate about a shaft (60), characterized in that the cleaning tools (63) are fully or partly constituted by or have a surface constituted by a moisture absorbing material being made from a woven product or fabric, said cleaning tools operating with a rubbing motion.

2. An apparatus for cleaning the teats of a dairy animal's udder provided with a cleaning member capable of being driven and taken, at least partly, under the udder of the dairy animal, the cleaning member being provided with at least two cleaning tools which are each mounted to rotate about a shaft , said shafts being parallel to one another while the cleaning tools are constituted by a closed cell structure, characterized in that the cleaning tools have such a direction of motion that the teats are drawn between the cleaning tools, said tools operating with a rubbing motion.

3. An apparatus as claimed in claim 1 or 2, characterized in that the cleaning tools (40, 63) are rotatable about one shaft (60) or about a plurality of shafts (41) being parallel to one another.

4. An apparatus as claimed in claim 1 or 3, characterized in that the cleaning tools (40) have such a direction of motion that the teats are drawn between the cleaning tools (40).

5. An apparatus as claimed in any one of the preceding claims, characterized in that the cleaning tools (40) are of a tubular shape and are made from a flexible material.

6. An apparatus as claimed in any one of the preceding claims, characterized in that the cleaning tools (40) are provided with profiles (51).

7. An apparatus as claimed in claim 6, characterized in that the two cleaning tools (40) are each other's mirror image and that a recess between ridges is of such a shape that the cleaning tools (40) together are capable of enclosing a teat in it.

8. An apparatus as claimed in any one of the preceding claims, characterized in that the cleaning tools (40) have a portion with an empty space, to which e.g. a cleaning or disinfecting liquid can be fed, enabling the surface of the cleaning tools (40) to be moistened with it.

9. An apparatus as claimed in any one of the preceding claims, characterized in that the cleaning tools (40) are of an elastic material, such as rubber or plastic, assuming its operative shape at a certain pneumatic or hydraulic pressure.

10. An apparatus as claimed in any one of the preceding claims, characterized in that the surface layer of the cleaning tools (40, 63) is exchangeable e.g. through a sleeve applied to the cleaning tools (40, 63).

11. An apparatus as claimed in claim 1 or 3, characterized in that the cleaning tools (63) are made from a flexible, strip-like material.

12. An apparatus as claimed in claim 1, 3 or 11, characterized in that the cleaning tools (63) are disposed such that under the action of the centrifugal force they assume an attitude sloping upward in radial outward direction.

13. An apparatus as claimed in claim 1, 3, 11, 12, characterized in that the rotary shaft (60) points upward.

14. An apparatus as claimed in any one of the preceding claims, characterized in that the cleaning member (33, 54) is capable of being motor-driven and is provided on or near the extremity of a support (32) to be placed under the dairy animal, by means of a robot arm (1).

15. An apparatus as claimed in any one of the preceding claims, characterized in that the rotational speed of the cleaning tools (40, 63) is variable.

16. An apparatus as claimed in any one of the preceding claims, characterized in that the cleaning tools (40, 63) or the cleaning member (33, 54) is/are capable of being coupled or uncoupled by means of a quick-action attachment, such as a bayonet joint.

17. An apparatus as claimed in claim 14, characterized in that the robot arm (1) has, on or near the end, a teat cup cluster (24) whose teat cups (24) are suitable for being attached to the teats when the robot arm (1) has been placed under the dairy animal's udder, while also the support (32) can be placed on or near the teat cups (24), the support (32) being secured to the teat cups (24) by suction.

18. An apparatus as claimed in any one of the claims 14 to 17, characterized in that the support (32) is provided with a connecting and disconnecting member (35), by means of which the support (32) is coupled to, or uncoupled from, the robot arm (1).

19. An apparatus as claimed in any one of the preceding claims, characterized in that there are provided cleaning means (69) for decontaminating the cleaning tools (40, 63).

## Patentansprüche

1. Vorrichtung zum Reinigen der Zitzen des Euters eines milchgebenden Tieres mit einer antreibbaren Reinigungsvorrichtung (54), die zumindest teilweise unter das Euter des milchgebenden Tieres zu bewegen ist, wobei die Reinigungsvorrichtung (54) mindestens zwei Reinigungswerkzeuge (63) aufweist, die um eine Achse (60) drehbar sind,
dadurch gekennzeichnet, daß die Reinigungswerkzeuge (63) ganz oder teilweise aus feuchtigkeitsabsorbierendem Material bestehen oder eine Oberfläche haben, die aus einem solchen Material besteht, das aus einem gewebten Produkt oder Gewebe hergestellt ist, wobei die Reinigungswerkzeuge eine wischende Bewegung ausführen.

2. Vorrichtung zum Reinigen der Zitzen des Euters eines milchgebenden Tieres mit einer antreibbaren Reinigungsvorrichtung, die zumindest teilweise unter das Euter des milchgebenden Tieres zu bewegen ist, wobei die Reinigungsvorrichtung mindestens zwei Reinigungswerkzeuge aufweist, die jeweils um eine Achse drehbar sind, wobei die Achsen parallel zueinander angeordnet sind, wobei die Reinigungswerkzeuge durch eine geschlossenporige Struktur gebildet sind,
dadurch gekennzeichnet, daß die Reinigungswerkzeuge eine solche Bewegungsrichtung aufweisen, daß die Zitzen zwischen die Reinigungswerkzeuge gezogen werden, wobei die Werkzeuge eine wischende Bewegung ausführen.

3. Vorrichtung nach Anspruch 1 oder 2,
dadurch gekennzeichnet, daß die Reinigungswerkzeuge (40, 63) um eine einzige Achse (60) oder um mehrere parallel zueinander angeordnete Achsen (41) drehbar sind.

4. Vorrichtung nach Anspruch 1 oder 3,
dadurch gekennzeichnet, daß sich die Reinigungswerkzeuge (40) in einer solchen Richtung bewegen, daß die Zitzen zwischen die Reinigungswerkzeuge (40) gezogen werden.

5. Vorrichtung nach einem der vorhergehenden Ansprüche,
dadurch gekennzeichnet, daß die Reinigungswerkzeuge (40) rohrförmig ausgebildet und aus einem flexiblen Material hergestellt sind.

6. Vorrichtung nach einem der vorhergehenden Ansprüche,
dadurch gekennzeichnet, daß die Reinigungswerkzeuge (40) Profile (51) aufweisen.

7. Vorrichtung nach Anspruch 6,
dadurch gekennzeichnet, daß die beiden Reinigungswerkzeuge (40) spiegelbildlich zueinander ausgebildet sind, und daß eine Ausnehmung zwischen Rippen des Profils derart ausgebildet ist, daß von den Reinigungswerkzeugen (40) gemeinsam eine Zitze zu umschließen ist.

8. Vorrichtung nach einem der vorhergehenden Ansprüche,
dadurch gekennzeichnet, daß die Reinigungswerkzeuge (40) einen Abschnitt mit einem Hohlraum aufweisen, in den beispielsweise eine Reinigungs- oder Desinfektionsflüssigkeit einzuleiten ist, mittels der die Oberfläche der Reinigungswerkzeuge (40) anzufeuchten ist.

9. Vorrichtung nach einem der vorhergehenden Ansprüche,
dadurch gekennzeichnet, daß die Reinigungswerkzeuge (40) aus einem elastischen Material wie z. B. Gummi oder Kunststoff hergestellt sind und ihre für den Betrieb erforderliche Gestalt bei einem bestimmten pneumatischen oder hydraulischen Druck annehmen.

10. Vorrichtung nach einem der vorhergehenden Ansprüche,
dadurch gekennzeichnet, daß die die Oberfläche bildenden Teile der Reinigungswerkzeuge (40, 63) auswechselbar sind, beispielsweise mittels einer an den Reinigungswerkzeugen (40, 63) angebrachten Hülse.

11. Vorrichtung nach Anspruch 1 oder 3,
dadurch gekennzeichnet, daß die Reinigungswerkzeuge (63) aus einem flexiblen streifenförmigen Material hergestellt sind.

12. Vorrichtung nach Anspruch 1, 3 oder 11,
dadurch gekennzeichnet, daß die Reinigungswerkzeuge (63) derart angeordnet sind, daß sie durch die Wirkung der Zentrifugalkraft eine Position einnehmen, in der sie in radialer Richtung nach außen und schräg nach oben gerichtet sind.

13. Vorrichtung nach Anspruch 1, 3, 11, 12,
dadurch gekennzeichnet, daß die Drehachse (60) aufwärts gerichtet ist.

14. Vorrichtung nach einem der vorhergehenden Ansprüche,
dadurch gekennzeichnet, daß die Reinigungsvorrichtung (33, 54) durch einen Motor anzutreiben und an oder nahe dem Ende eines Trägers (32) angeordnet ist, der mittels eines Roboterarmes (1) unter das milchgebende Tier zu bewegen ist.

15. Vorrichtung nach einem der vorhergehenden Ansprüche,
dadurch gekennzeichnet, daß die Rotationsgeschwindigkeit der Reinigungswerkzeuge (40, 63) variabel ist.

16. Vorrichtung nach einem der vorhergehenden Ansprüche,
dadurch gekennzeichnet, daß die Reinigungswerkzeuge (40, 63) oder die Reinigungsvorrichtung (33, 54) mittels eines Schnellverschlusses, beispielsweise eines Bajonettverschlusses, anzuschließen oder zu lösen sind.

17. Vorrichtung nach Anspruch 14,
dadurch gekennzeichnet, daß der Roboterarm (1) an oder nahe seinem Ende ein Zitzenbecher-Geschirr (24) aufweist, dessen Zitzenbecher (24) an die Zitzen anzuschließen sind, nachdem der Roboterarm (1) unter das Euter des milchgebenden Tieres bewegt worden ist, wobei auch der Träger (32) an oder nahe den Zitzenbechern (24) zu positionieren und an diese durch Saugkraft anzubringen ist.

18. Vorrichtung nach einem der Ansprüche 14 bis 17,
dadurch gekennzeichnet, daß der Träger (32) ein Verbindungs- und Trennglied (35) aufweist, mittels dessen der Träger (32) mit dem Roboterarm (1) zu verbinden oder von ihm zu trennen ist.

19. Vorrichtung nach einem der vorhergehenden Ansprüche,
dadurch gekennzeichnet, daß eine Reinigungsvorrichtung (69) zum Dekontaminieren der Reinigungswerkzeuge (40, 63) vorgesehen ist.

## Revendications

1. Appareil pour nettoyer les trayons du pis d'un animal laitier, muni d'un organe nettoyeur (54) pouvant être entraîné et amené, au moins partiellement, sous le pis de l'animal laitier, l'organe nettoyeur (54) étant muni d'au moins deux outils nettoyeurs (63) qui sont montés rotatifs autour d'un arbre (60),
caractérisé en ce que les outils nettoyeurs (63) sont constitués entièrement ou partiellement d'une surface constituée d'un matériau absorbant l'humidité, étant fait d'un produit tissé ou d'un tissu, lesdits outils nettoyeurs agissant avec un mouvement de frottement.

2. Appareil pour nettoyer les trayons du pis d'un animal laitier, muni d'un organe nettoyeur pouvant être entraîné et amené, au moins partiellement, sous le pis de l'animal laitier, l'organe nettoyeur étant muni d'au moins deux outils nettoyeurs (63) qui sont montés rotatifs autour d'un arbre, lesdits arbres étant parallèles entre eux, les outils nettoyeurs étant constitués d'une structure cellulaire fermée, caractérisé en ce que les outils nettoyeurs ont une telle direction de mouvement que les trayons sont tirés entre les outils nettoyeurs, lesdits outils nettoyeurs agissant avec un mouvement de frottement.

3. Appareil selon la revendication 1 ou 2, caractérisé en ce que les outils nettoyeurs (40, 63) sont rotatifs autour d'un arbre ou autour d'une pluralité d'arbres (41) étant parallèles entre eux.

4. Appareil selon la revendication 1 ou 3, caractérisé en ce que les outils nettoyeurs (40) ont une direction de mouvement telle que les trayons sont tirés entre les outils nettoyeurs (40).

5. Appareil selon l'une quelconque des revendications précédentes, caractérisé en ce que les outils nettoyeurs (40) ont une forme tubulaire et sont faits d'un matériau flexible.

6. Appareil selon l'une quelconque des revendications précédentes, caractérisé en ce que les outils nettoyeurs (40) sont munis de profils (51).

7. Appareil selon la revendication 6, caractérisé en ce que les deux outils nettoyeurs (40) sont symétriques l'un de l'autre et en ce qu'un creux entre des stries a une forme telle que les outils nettoyeurs (40) sont capables ensemble d'entourer un trayon dans ce creux.

8. Appareil selon l'une quelconque des revendications précédentes, caractérisé en ce que les outils nettoyeurs (40) ont une partie avec un espace vide, auquel peut être fourni, par exemple, un liquide de nettoyage ou désinfectant, permettant d'humidifier la surface des outils nettoyeurs (40) avec celui-ci.

9. Appareil selon l'une quelconque des revendications précédentes, caractérisé en ce que les outils nettoyeurs (40) sont en matériau élastique tel que caoutchouc ou matière plastique, prenant sa forme opérationnelle à une certaine pression pneumatique ou hydraulique.

10. Appareil selon l'une quelconque des revendications précédentes, caractérisé en ce que la couche superficielle des outils nettoyeurs (40, 63) est échangeable, par exemple au moyen d'un manchon appliqué aux outils nettoyeurs (40, 63).

11. Appareil selon la revendication 1 ou 3, caractérisé en ce que les outils nettoyeurs (63) sont faits d'un matériau flexible analogue à une bande.

12. Appareil selon la revendication 1, 3 ou 11, caractérisé en ce que les outils nettoyeurs (63) sont disposés de telle sorte que, sous l'action de la force centrifuge, ils prennent une attitude inclinée vers le haut dans le sens radial vers l'extérieur.

13. Appareil selon la revendication 1, 3, 11 ou 12, caractérisé en ce que l'arbre de rotation (60, 64) est dirigé vers le haut.

14. Appareil selon l'une quelconque des revendications précédentes, caractérisé en ce que l'organe nettoyeur (33, 54) est susceptible d'être entraîné par un moteur et est prévu sur, ou près de, l'extrémité d'un support (32) destiné à être placé sous l'animal laitier au moyen d'un bras de robot (1).

15. Appareil selon l'une quelconque des revendications précédentes, caractérisé en ce que la vitesse de rotation des outils nettoyeurs (40, 63) est variable.

16. Appareil selon l'une quelconque des revendications précédentes, caractérisé en ce que les outils nettoyeurs (40, 63) ou l'organe nettoyeur (33, 54) est/sont capable(s) d'être couplé(s) ou découplé(s) au moyen d'un raccord rapide tel qu'un raccord à bayonnette.

17. Appareil selon la revendication 14, caractérisé en ce que le bras de robot (1) a, sur son extrémité ou près de celle-ci, un groupe de godets de trayons (24) dont les godets de trayons (24) sont aptes à être attachés aux trayons quand le bras de robot (1) a été placé sous le pis de l'animal laitier, tandis que le support (32) peut aussi être placé sur les godets de trayons (24) ou près de ceux-ci, le support (32) étant fixé aux godets de trayons (24) par succion.

18. Appareil selon l'une quelconque des revendications 14 à 17, caractérisé en ce que le support (32) est pourvu d'un organe (35) de connexion et de déconnexion au moyen duquel le support (32) est couplé au bras de robot (1) ou découplé de celui-ci.

19. Appareil selon l'une quelconque des revendications précédentes, caractérisé en ce que sont prévus des moyens de nettoyage (69) pour décontaminer les outils nettoyeurs (40, 63).
